Europäisches Patentamt

European Patent Office

Office européen des brevets

(19)

(11) Numéro de publication: **0 021 958**
**B1**

(12) **FASCICULE DE BREVET EUROPEEN**

(45) Date de publication du fascicule du brevet: **04.01.84**

(51) Int. Cl.³: **F 16 F 3/08, F 16 F 15/08**

(21) Numéro de dépôt: **80400852.2**

(22) Date de dépôt: **12.06.80**

(54) Structure composite antivibratoire.

(30) Priorité: **12.06.79 FR 7914973**

(43) Date de publication de la demande:
**07.01.81 Bulletin 81/1**

(45) Mention de la délivrance du brevet:
**04.01.84 Bulletin 84/1**

(84) Etats contractants désignés:
**BE CH DE FR GB IT LI LU NL**

(56) Documents cités:
**DE - A - 2 602 642**
**FR - A - 759 174**
**FR - A - 949 064**
**FR - A - 1 133 595**
**FR - A - 1 239 789**
**FR - A - 2 140 325**
**FR - A - 2 203 467**
**FR - A - 2 348 402**
**FR - A - 2 392 807**
**GB - A - 886 527**
**US - A - 4 002 315**

(73) Titulaire: **Société Anonyme dite :K-PRIS**
**19, rue Roger Salengro**
**F-92130 Issy-Les-Moulineaux (FR)**

(72) Inventeur: **Kleinfelden, Jean**
**28, Avenue de Suffren**
**F-75015 Paris (FR)**

(74) Mandataire: **Jolly, Jean-Pierre et al,**
**Cabinet BROT 83, rue d'Amsterdam**
**F-75008 Paris (FR)**

Courier Press, Leamington Spa, England.

## Structure composite antivibratoire

L'invention concerne une structure composite antivibratoire.

On décrit dans le brevet FR—A—2 348 402, des blocs amortisseurs de vibrations constitués d'au moins deux panneaux superposés en un matériau élastique présentant une durée Shore différente. Cas panneaux comportent respectivement, sur leur face externe, des plots déformables dont la section à l'état de repos varie en diminuant depuis leur base jusqu'à leur sommet. Ces plots sont, par exemple, disposés en quinconce sur chaque face et, de préférence, un plot d'une face d'un panneau correspond à un évidement de la face correspondante de l'autre panneau.

Dans une forme de réalisation représentée sur la figure 3 du brevet précité, les faces en contact des deux éléments constitutifs de ces blocs amortisseurs comportent des cannelures longitudinales ayant, en coupe tranversale, la forme d'une ligne sinusoïdale ou en créneaux ou encore en dents de scie. Les parties en saillie de l'une des faces sont imbriquées dans les parties en creux de l'autre face et, du fait de leur dureté différente, elles préviennent la propagation des ondes tranversalement à la direction des cannelures.

La Demanderesse a toutefois constaté qu'avec de tels blocs amortisseurs de vibrations, les ondes vibratoires peuvent se propager dans le sens longitudinal en suivant les cannelures et la présente invention vise à remédier à cet inconvénient, en perfectionnant les blocs antivibratoires conformes au brevet précité.

A cet effet, l'invention a pour objet une structure composite antivibratoire constituée d'au moins deux plaques superposées en des matériaux élastiques présentant respectivement une dureté Shore différente, ces plaques comportant sur leur face externe des plots déformables, tandis que leurs faces en contact mutuel comportant des cannelures rectilignes de profil complémentaire, les parties en saillie des cannelures de chaque face étant emboîtées dans les parties en creux correspondantes de l'autre face, cette structure antivibratoire étant caractérisée en ce que les parties en saillie desdites cannelures sont fendues, sensiblement depuis leur base, à intervalles de préférence réguliers, par des découpes transversales.

Ces découpes transversales, qui interrompent périodiquement les parois latérales desdites cannelures, s'opposent ainsi de façon particulièrement simple à la propagation longitudinale des ondes vibratoires dans la direction de ces cannelures.

Ce perfectionnement s'applique aussi bien aux cannelures dont le profil, en coupe transversale, est en dents de scie ou sinusoïdal, qu'à celles dont le profil transversal a la forme de créneaux.

Dans le brevet FR—A—2 203 467 un support anti-vibration est décrit dont une surface présente des nervures dans lesquelles sont ménagées des interruptions qui existent sur les surfaces externes du support et c'est par cette surface que la structure anti-vibration entre en contact avec le sol et avec une machine à isoler tandis que selon l'invention les découpes sont pratiquées dans les nervures des deux plaques au niveau de leur plan de point.

Par ailleurs, la structure antivibratoire selon le brevet FR—A—2 392 807 se distingue nettement de celle de la demande, par le fait que les interfaces antivibratoires sont constituées par un contact étroit des surfaces correspondantes, c'est-à-dire par une discontinuité entre les matériaux différents, alors que selon la présente invention, les interfaces antivibratoires sont constituées par des discontinuités entre les matériaux différents et l'air compris entre les fentes.

C'est cette dernière forme de réalisation qui est représentée sur les dessins annexés, sur lesquels:

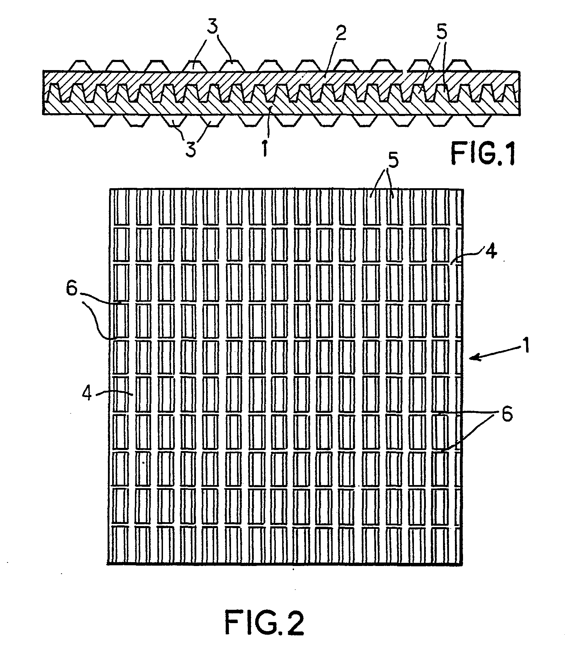

— la figure 1 est une coupe transversale d'une structure antivibratoire conforme à l'invention;

— la figure 2 est une vue en plan de la face cannelée de l'un des éléments constitutifs de cette structure.

Cette structure comprend, de façon connue en soi, deux plaques superposées, 1 et 2, en des matériaux élastiques de dureté Shore différente. Les plaques 1 et 2 comprennent, sur leur face externe, des plots déformables 3, dont la section décroît de leur base à leur sommet, les plots de chaque face externe d'une plaque étant disposés en quinconce et décalés par rapport à ceux de la face externe de l'autre plaque.

Les deux plaques 1 et 2 sont en contact mutuel par des faces présentant des cannelures longitudinales 4, disposées régulièrement. En coupe transversale, ces cannelures ont un profil en créneaux, le profil de l'une des faces étant complémentaire de celui de l'autre face; les deux plaques 1 et 2 sont ainsi étroitement imbriquées l'une dans l'autre au niveau de leur plan de joint. Dans le cas du dessin, les parties en saillie 5 définissant les cannelures ont une section trapézoïdale, mais elles pourraient avoir n'importe quelle autre forme.

Conformément à l'invention, des fentes 6, s'étendant sensiblement depuis la base des parties en saillie 5 jusqu'à leur sommet, coupent à intervalles réguliers ces parties 5 et s'opposent ainsi à la propagation des ondes vibratoires dans la direction longitudinale des cannelures.

Ce perfectionnement particulièrement simple, apporté aux structures composites d'un type connu améliore considérablement les propriétés antivibratoires de ces structures.

## Revendication

Structure composite antivibratoire constituée d'au moins deux plaques superposées (1 et 2) en des matériaux élastiques présentant respectivement une dureté Shore différente, ces plaques comportant sur leur face externe des plots déformables (3), tandis que leurs faces en contact mutuel comportent des cannelures rectilignes (4) de profil complémentaire, les parties en saillie (5) des cannelures (4) de chaque face étant emboîtées dans les parties en creux correspondantes de l'autre face, cette structure antivibratoire étant caractérisée en ce que les parties en saillie (5) desdites cannelures sont fendues, sensiblement depuis leur base, à intervalles de préférence réguliers, par des découpes transversales (6).

## Patentanspruch

Schwingungsfestes Verbundgefüge bestehend aus zumindest zwei übereinanderliegenden Platten (1 und 2) aus elastischem Material von jeweils unterschiedlicher Shore-Härte, wobei diese Platten auf ihrer äußeren Fläche verformbare Klötze oder Vorstülpungen (3) aufweisen, während ihre wechselseitig kontaktierenden Flächen geradlinige Auskehlungen (4) komplementärer Paßform besitzen und die ausspringenden Teile (5) der Auskehlungen (4) jeder Seite in den entsprechenden Hohlteilen der anderen Seite ineinandergepaßt sind, dadurch gekennzeichnet, daß bei diesem schwingungsfesten Gefüge die ausspringenden Teile (5) der Auskehlungen allgemein von ihrer Basis aus mit vorzugsweise regelmäßigen Intervallen durch transversale Schnittvorgänge (6) geschlitzt sind.

## Claim

A composite anti-vibration structure formed from at least two superimposed plates (1, 2) made from resilient materials having respectively a different Shore hardness, these plates comprising on their external face deformable studs (3), whereas their faces in mutual contact comprise rectilinear grooves (4) with a complementary profile, the projecting parts (5) of the grooves of each face fitting into the corresponding hollow parts of the other face, this antivibration structure being characterized in that the projecting parts (5) of said grooves are split, substantially from their base, preferably at regular intervals, by transverse cuts (6).

FIG.1

FIG.2